# EUROPÄISCHE PATENTSCHRIFT

(11) **EP 1 608 528 B1**
(45) Veröffentlichungstag und Bekanntmachung des Hinweises auf die Patenterteilung: **30.06.2010**
(21) Anmeldenummer: 04707514.8
(22) Anmeldetag: 03.02.2004
(51) Int. Cl.: B60N 2/36

(54) **VERRIEGELUNGSVORRICHTUNG FÜR EINEN FAHRZEUGSITZ**
LOCKING MECHANISM FOR A VEHICLE SEAT
DISPOSITIF DE VERROUILLAGE POUR SIEGE DE VEHICULE

(30) Priorität: 08.02.2003 DE 10305177
(43) Veröffentlichungstag der Anmeldung: 28.12.2005
(73) Patentinhaber: KEIPER GmbH & Co. KG, 67657 Kaiserslautern (DE)
(72) Erfinder: CHRISTOFFEL, Thomas, 66909 Herschweiler (DE); WINDECKER, Volker, 67729 Sippersfeld (DE); MÜLLER, Peter, 67661 Kaiserslautern (DE); YASAROGLU, Kadir, 67661 Kaiserslautern (DE); TRAUTMANN, Holger, 66459 Kirkel (DE); BÄUMCHEN, Carsten, 66649 Oberthal (DE)
(74) Vertreter: Patentanwälte Hosenthien-Held und Dr. Held
(86) Internationale Anmeldenummer: PCT/EP2004/000949
(87) Internationale Veröffentlichungsnummer: WO 2004/069580

(56) Entgegenhaltungen:
- EP-A- 0 171 032
- EP-A- 1 138 547
- DE-A1- 3 911 135
- DE-C1- 3 510 006
- US-A- 4 765 682

## Beschreibung

Die Erfindung betrifft eine Verriegelungsvorrichtung für einen Fahrzeugsitz, insbesondere für einen Kraftfahrzeugsitz, mit den Merkmalen des Oberbegriffs des Anspruches 1.

Die DE-A-39 11 135 offenbart sämtliche Merkmale des Oberbegriffs des Anspruchs 1.

Bei der aus der DE 39 11 135 A1 bekannten Verriegelungsvorrichtung sind innerhalb eines offenen Gehäuses die Klinke und ein Sicherungselement angeordnet. Die voll funktionsfähige Verriegelungsvorrichtung, welche auch bereits ihre volle Festigkeit aufweist, wird als Ganzes an der Lehne angebracht. Üblich ist eine Anbringung an einem Strukturteil, beispielsweise einem Adaptionsteil oder direkt an einem tragenden Teil der Struktur der Lehne. Gemäß der DE 35 10 006 C1 wird eine ähnliche Verriegelungsvorrichtung mittels Befestigungslaschen an der Lehne angebracht. Die US 4,765,682 A zeigt eine Verriegelungsvorrichtung mit einem zweiteiligen Gehäuse, welches durch die Befestigungselemente, die die Lagerstellen der Klinke und des Sicherungselementes bilden, axial zusammengehalten wird und welches seitliche Laschen zur Befestigung aufweist.

Der Erfindung liegt die Aufgabe zu Grunde, eine Verriegelungsvorrichtung der eingangs genannten Art zu verbessern. Diese Aufgabe wird erfindungsgemäß durch eine Verriegelungsvorrichtung mit den Merkmalen des Anspruches 1 gelöst. Vorteilhafte Ausgestaltungen sind Gegenstand der Unteransprüche.

Dadurch, dass das Strukturteil den Deckel zum weitgehenden Schließen des Gehäuses bildet, muss kein gesonderter Deckel vorgesehen werden, was Material, Gewicht und Bauraum spart, insbesondere unnötige Materialdopplungen vermeidet. Dadurch, dass wenigstens ein Befestigungselement den axialen Zusammenhalt von Gehäuse und Strukturteil sichert, wird die Verbindung der beiden Bauteile hergestellt. Das Befestigungselement ist an den Enden durch eine stoffschlüssige und/oder formschlüssige Verbindung mit dem Gehäuse und dem Strukturteil gesichert, d.h. in der Regel an dem Gehäuse oder dem Strukturteil auf der nach außen gewandten Seite anliegend oder mit diesem verbunden. Die vorzugsweise bereits für den Normalgebrauch funktionsfähige und prüffähige, zu einer Seite hin offene Verriegelungsvorrichtung erhält durch die Anbringung an dem Strukturteil mittels des Befestigungselementes oder der Befestigungselemente ihre volle Festigkeit, insbesondere im Hinblick auf die Belastungen im Crashfall. Zugleich werden die Bauteile innerhalb der Verriegelungsvorrichtung durch das Schließen des Gehäuses vor Beschädigungen und Verschmutzungen geschützt. Als Befestigungselemente sind vorzugsweise ein oder mehrere Bolzen vorgesehen, worunter auch Schrauben, Nieten oder andere Befestigungselemente verstanden sein sollen. Derartige Bolzen sind im Bereich der Lagerstellen für die Klinke und/oder die vorgesehenen Sicherungselemente angeordnet, insbesondere im Zentrum der dann hohl ausgebildeten Lagerstellen, oder sie bilden selbst die Lagerstellen.

Mit der erfindungsgemäßen Lösung steht auch ein modulares System zur Verfügung, bei welchem die Basisfunktionen, insbesondere die Verriegelungsfunktion, in eine Basiskomponente, nämlich die eigentliche Verriegelungsvorrichtung, integriert sind, während kundenspezifische Funktionen, wie Blendenbefestigung, Anbindungsadaption an die Struktur oder dergleichen, in das Strukturteil als kundenspezifische Komponente integriert werden. Die Basiskomponente kann dann in hoher Stückzahl, also kostengünstiger hergestellt werden, und außerdem können die kundenspezifischen Komponenten in der Montagereihenfolge zum Schluss erfolgen, d.h. die Basiskomponente als Modul vormontiert sein. Die Belastbarkeit kann auch variabel gehalten werden, d.h. über die kundenspezifischen Strukturteile kundenspezifisch an die jeweiligen Anforderungen angepasst werden, so dass Überdimensionierungen vermieden werden.

Vorzugsweise sind Bauteile zur axialen Sicherung der Klinke und/oder der vorgesehenen Sicherungselemente vorgesehen, die ihre Wirkung bereits vor der Anbringung der Verriegelungsvorrichtung am Strukturteil entfalten, was die Prüffähigkeit verbessert und geringere Anforderungen an die Toleranzen des Strukturteils stellt.

In einer bevorzugten Ausführungsform sind die Klinke und/oder das oder die Sicherungselemente auf einem Durchzug gelagert, der am Gehäuse angeformt ist, was kostengünstiger ist als die Herstellung spezieller Lagerbolzen und die Verwendung von Schrauben zur kostengünstigen Anbringung am Strukturteil erlaubt. Der Durchzug kann eine Stufe aufweisen, welche Lagerabschnitte mit unterschiedlichem Außendurchmesser voneinander trennt und damit einen definierten Anschlag bildet. So können die Klinke und/oder die vorgesehenen Sicherungselemente auf dem weiter innen im Gehäuse gelegenen Lagerabschnitt mit größerem Außendurchmesser gelagert sein, während auf dem weiter außen gelegenen Lagerabschnitt mit kleinerem Außendurchmesser ein Haltering (oder ein anderes axial sicherndes und/oder distanzwahrendes Zwischenelement) und/oder das Strukturteil sitzt. Im Sofern ein Zwischenelement bis zur Stufe aufgeschoben wird, so bildet dieses seinerseits vorzugsweise eine Anlage für das Strukturteil oder den Deckel, d.h. einen definierten Anschlag.

Bei einer Verriegelungsvorrichtung mit erhöhter Verriegelungssicherheit und erhöhter Belastbarkeit im Crashfall sind ein Spannexzenter und ein Fangstück als Sicherungselemente vorgesehen, wobei der federbelastete Spannexzenter im verriegelten Zustand die Klinke mit einem schließenden Moment beaufschlagt und das Fangstück im Crashfall die Klinke abstützt.

Die erfindungsgemäße Verriegelungsvorrichtung kann an verschiedenen Stellen eines Fahrzeugsitzes verwendet werden, beispielsweise zur Bodenanbindung des gesamten Fahrzeugsitzes oder als Lehnenschloß zur Befestigung der Lehne an der Fahrzeugstruktur, wobei die Verriegelungsvorrichtung an einem sitzstrukturfesten oder einem fahrzeugstrukturfesten Strukturteil angebracht und das Gegenelement entsprechend fahrzeugstrukturfest oder sitzstrukturfest ist. Die Verriegelungsvorrichtung kann auch in einen Gelenkbeschlag integriert sein, der zur Neigungseinstellung der Lehne vorgesehen ist, insbesondere wenn eines der Beschlagteile als Hohlkasten auszubilden ist.

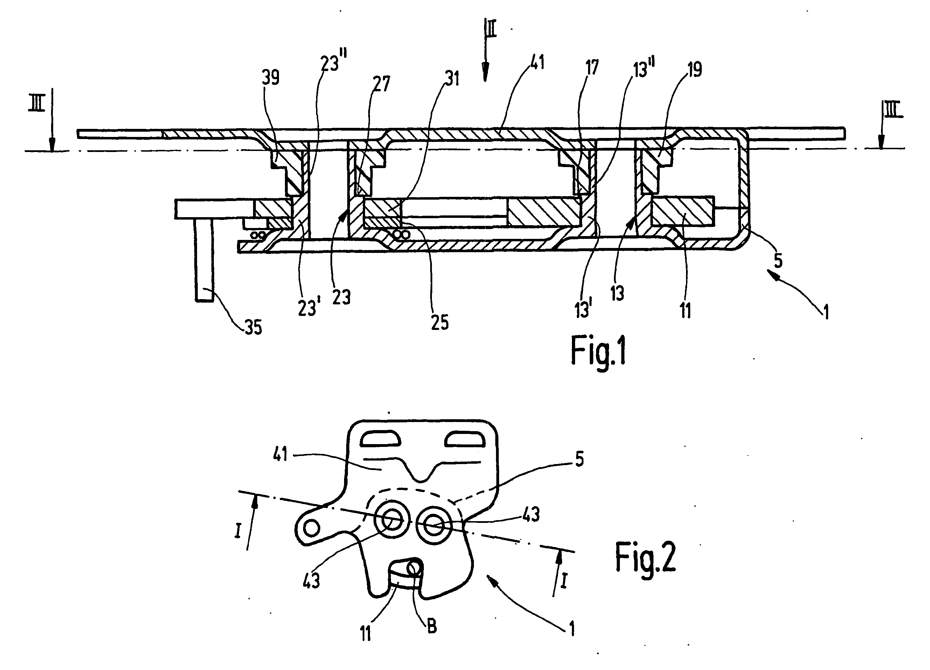

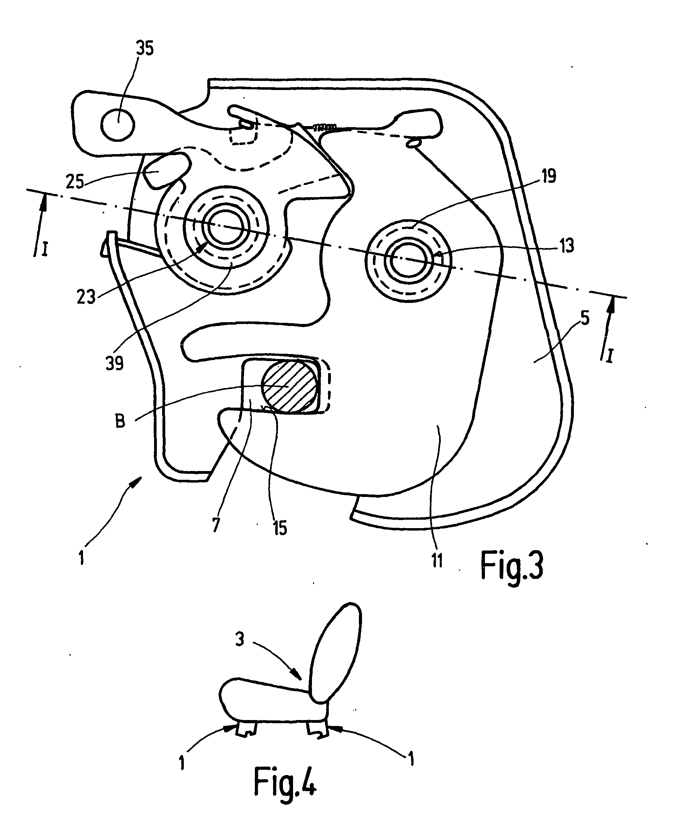

Im folgenden ist die Erfindung anhand zweier in der Zeichnung dargestellten Ausführungsbeispiele näher erläutert. Es zeigen
- Fig. 1: einen Schnitt durch das erste Ausführungsbeispiel entlang der Linie I-I in Fig. 2 und 3,
- Fig. 2: eine Seitenansicht des ersten Ausführungsbeispiels mit Blick in Richtung des Pfeiles II in Fig. 1,
- Fig. 3: einen Schnitt durch das erste Ausführungsbeispiel entlang der Linie III-III in Fig. 1 ohne Strukturteil,
- Fig. 4: eine schematisierte Darstellung eines Fahrzeugsitzes,

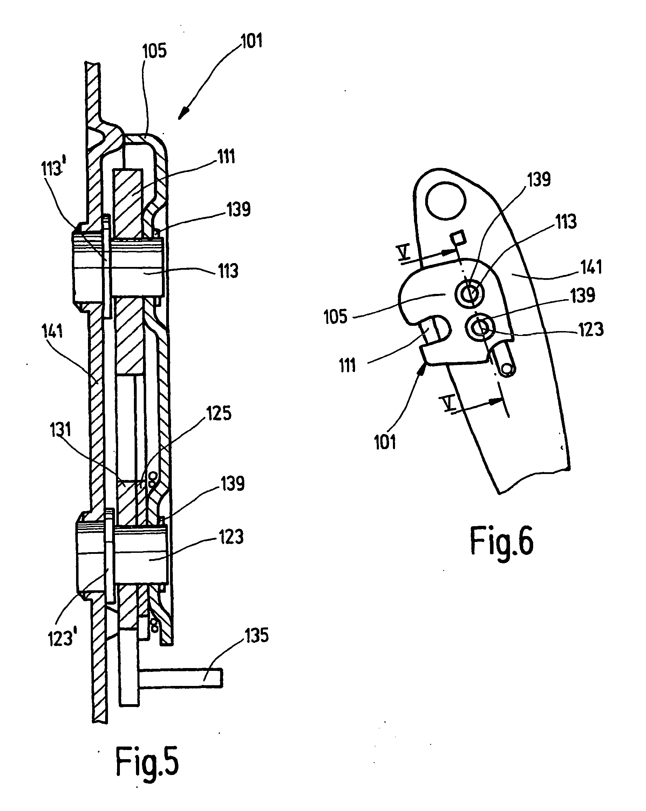

- Fig. 5: einen Schnitt durch das zweite Ausführungsbeispiel entlang der Linie V-V in Fig. 6, und
- Fig. 6: eine Seitenansicht des zweiten Ausführungsbeispiels.

Im ersten Ausführungsbeispiel ist eine Verriegelungsvorrichtung 1 zur Bodenanbindung eines Fahrzeugsitzes 3 in einem Kraftfahrzeug vorgesehen. Die Verriegelungsvorrichtung 1 weist ein offenes Gehäuse 5 mit einer ebenen Grundfläche und hochgezogenen Rändern auf, wobei diese Grundfläche vertikal und in Fahrtrichtung ausgerichtet ist und die nachfolgend verwendeten Richtungsangaben definiert. Im unteren Bereich des Gehäuses 5 ist eine Bolzenaufnahme 7 ausgebildet, welche sich nach unten öffnet und der Aufnahme eines fahrzeugstrukturfesten Bolzens B oder eines anderen Gegenelementes dient. Dabei ist die Breite der Bolzenaufnahme 7 für einen Toleranzausgleich größer als der Durchmesser des Bolzens B. Das Gegenelement kann auch ein Abschnitt eines Bügels sein.

Eine Klinke 11 ist auf einem ersten Durchzug 13 schwenkbar gelagert, welcher wiederum am Gehäuse 5 angeformt ist, d.h. in an sich bekannter Weise aus dem Material des Gehäuses 5 herausgebildet, und senkrecht von der Grundfläche des Gehäuses 5 absteht. Die Klinke 11 weist zum Zusammenwirken mit dem Bolzen B ein Hakenmaul 15 auf, welches in einem verriegelten Zustand der Verriegelungsvorrichtung 1 die Bolzenaufnahme 7 senkrecht kreuzt, während es in einem geöffneten Zustand die Bolzenaufnahme 7 öffnet. Der erste Durchzug 13 weist in axialer Richtung ungefähr in der Mitte eine erste Stufe 17 auf, welche einen näher zum Gehäuse 5 hin gelegenen, ersten inneren Lagerabschnitt 13' mit größerem Außendurchmesser von einem am freien Ende des ersten Durchzugs 13 gelegenen, ersten äußeren Lagerabschnitt 13" mit kleinerem Außendurchmesser trennt. Die Innendurchmesser der beiden ersten Lagerabschnitte 13' und 13" sind dabei identisch. Auf dem ersten inneren Lagerabschnitt 13' ist die Klinke 11 gelagert, während auf den ersten äußeren Lagerabschnitt 13" vom freien Ende des ersten Durchzugs 13 her ein erster Haltering 19 aus Kunststoff bis zur ersten Stufe 17 aufgeschoben, insbesondere aufgepresst, ist. Der erste Haltering 19 sichert die Klinke 11 in axialer Richtung. Auf der von der Klinke 11 abgewandten Seite ist am ersten Haltering 19 ein Flansch angeformt.

Beabstandet zum ersten Durchzug 13 ist ein prinzipiell gleich ausgebildeter zweiter Durchzug 23 am Gehäuse 5 angeformt. Auf dem zweiten Durchzug 23 ist ein federbelasteter Spannexzenter 25 schwenkbar gelagert, welcher in Richtung auf die Klinke 11 vorgespannt ist und diese im verriegelten Zustand mit einem schließenden Moment beaufschlagt und dadurch in Eingriff mit dem Bolzen B hält. Entsprechend zum ersten Durchzug 13 ist beim zweiten Durchzug 23 in axialer Richtung ungefähr in der Mitte eine zweite Stufe 27 vorgesehen, welche einen näher zum Gehäuse 5 hin gelegenen, zweiten inneren Lagerabschnitt 23' mit größerem Außendurchmesser von einem am freien Ende des zweiten Durchzugs 23 gelegenen, zweiten äußeren Lagerabschnitt 23" mit kleinerem Außendurchmesser trennt. Die Innendurchmesser der beiden zweiten Lagerabschnitte 23' und 23" sind dabei identisch. Auf dem zweiten inneren Lagerabschnitt 23' ist der Spannexzenter 25 gelagert.

Ferner ist auf dem zweiten inneren Lagerabschnitt 23' des zweiten Durchzugs 23 auch ein Fangstück 31 schwenkbar gelagert, welches durch eine Feder zur Klinke 11 hin vorgespannt ist. Im Normalfall ist das Fangstück 31 beabstandet zur Klinke 11 angeordnet. Im Crashfall, wenn die Klinke 11 ein öffnendes Moment erfährt und den Spannexzenter 25 wegdrückt, gelangt die Klinke 11 in Anlage an das Fangstück 31, welches die Klinke 11 abstützt und ein Öffnen derselben verhindert. An einem Arm des Fangstücks 31 steht ein Entriegelungsbolzen 35 senkrecht vom Fangstück 31 ab, also parallel zu den Durchzügen 13 und 23. Durch Bewegen dieses Entriegelungsbolzens 35 vom verriegelten Zustand aus nach unten, beispielsweise über einen Hebel oder einen Bowdenzug, schwenkt das Fangstück 31 von der Klinke 11 weg, wobei es über einen angeformten Mitnehmer, gegebenenfalls nach einem kleinen Leerhub, den Spannexzenter 25 mitnimmt. Die Klinke 11 wird dann nicht länger gesichert und wird - beispielsweise über die Federkopplung zum Fangstück 31 - aufgezogen. Der Spannexzenter 25 und das Fangstück 31 sind somit Sicherungselemente für die Klinke 11 sowohl im verriegelten als auch im geöffneten Zustand.

Auf den zweiten äußeren Lagerabschnitt 23" des zweiten Durchzugs 23 ist ein zweiter Haltering 39 bis zur zweiten Stufe 27 aufgeschoben, insbesondere aufgepresst, welcher dem ersten Haltering 19 gleicht, d.h. auch aus Kunststoff besteht und einen angeformten Flansch aufweist. Der zweite Haltering 39 sichert den Spannexzenter 25 und das Fangstück 31 in axialer Richtung.

Mit den vorstehend beschriebenen Bauteilen hat die Verriegelungsvorrichtung 1 für den Normalgebrauch bereits ihre Funktionsfähigkeit, bildet also eine prüffähige Einheit, auch wenn das Gehäuse 5 noch offen ist. Um die volle Festigkeit für den Crashfall zu erreichen, sind das Gehäuse 5 weitgehend zu schließen, nämlich bis auf den Bereich der Bolzenaufnahme 7 und des Entriegelungsbolzens 35, und die Lagerstellen zu verstärken. Als Deckel für das Gehäuse 5 wird erfindungsgemäß ein Strukturteil 41 der Struktur des Fahrzeugsitzes 3 verwendet, welches vorrangig zur Adaption der Verriegelungsvorrichtung 1 an die spezielle Struktur des Fahrzeugsitzes 3 konzipiert und daher fahrzeugsitzspezifisch ist. Das Strukturteil 41 liegt an den durch die Flansche vergrößerten, vom Gehäuse 5 wegweisenden Stirnseiten der Halteringe 19 und 39 an. Zwei gleiche Befestigungsbolzen 43 oder andere Befestigungselemente sind in axialer Richtung durch den ersten Durchzug 13 bzw. zweiten Durchzug 23 gesteckt und mit dem Gehäuse 5 und dem Strukturteil 41 vernietet (oder anderweitig formschlüssig verbunden) oder verschweißt (oder anderweitig stoffschlüssig verbunden), so daß die durch die Durchzüge 13 und 23 definierten Lagerstellen sowohl in axialer als auch in radialer Richtung hoch belastbar sind.

In einer Abwandlung hierzu entfallen die Halteringe 19 und 39, so daß das Strukturteil 41 direkt an den Absätzen 17 und 27 anliegt. Da das Strukturteil 41 dann auch die axiale Sicherung von Klinke 11, Spannexzenter 25 und Fangstück 31, d.h. die Funktionsfähigkeit der abgewandelten Verriegelungsvorrichtung, sicherstellen muß, bestehen höhere Anforderungen an die Toleranzgenauigkeit des Strukturteils.

Das zweite Ausführungsbeispiel gleicht - soweit nachstehend nicht abweichend beschrieben - dem ersten Ausführungsbeispiel, weshalb gleiche und gleichwirkende Bauteile um 100 höhere Bezugszeichen tragen. Die Verriegelungsvorrichtung 101 des zweiten Ausführungsbeispiels weist ebenfalls eine für den Normalgebrauch funktionsfähige und prüffähige Einheit mit einem offenen Gehäuse 105, einer schwenkbaren Klinke 111, welche allerdings auf einem fest im Gehäuse 105 sitzenden ersten Lagerbolzen 113 gelagert ist, einem auf einem entsprechenden zweiten Lagerbolzen 123 schwenkbar gelagerten, vorgespannten Spannexzenter 125 zum Beaufschlagen der Klinke 111 mit einem schließenden Moment im verriegelten Zustand, einem ebenfalls auf dem zweiten Lagerbolzen 123 schwenkbar gelagerten Fangstück 131 zum Abstützen der Klinke 111 im Crashfall und einem vom Fangstück 131 abstehenden Entriegelungsbolzen 135. Die beiden Lagerbolzen 113 und 123 sorgen durch angeformte Flansche 113' bzw. 123' an dem vom Gehäuse 105 abgewandten Ende und formschlüssig eingepasste Halteringe 139 am anderen Ende für eine axiale Sicherung der Bauteile.

Auch hier wird die volle Festigkeit erreicht durch eine Verbindung mit einem Strukturteil 141, vorliegend einem Lehnenholm, welches als Deckel das Gehäuse 105 weitgehend schließt. Die beiden Lagerbolzen 113 und 123 werden formschlüssig in entsprechende Öffnungen des Strukturteil 141 gesteckt, wobei die Flansche 113' und 123' am Strukturteil 141 anliegen, und dann mit dem Strukturteil 141 verbunden, beispielsweise verschweißt (oder anderweitig stoffschlüssig verbunden) oder vernietet (oder anderweitig formschlüssig verbunden).

### Bezugszeichenliste

- 1, 101: Verriegelungsvorrichtung
- 3: Fahrzeugsitz
- 5, 105: Gehäuse
- 7: Bolzenaufnahme
- 11, 111: Klinke
- 13: erster Durchzug
- 13': erster innerer Lagerabschnitt
- 13": erster äußerer Lagerabschnitt
- 15: Hakenmaul
- 17: erste Stufe
- 19: erster Haltering, Zwischenelement
- 23: zweiter Durchzug
- 23': zweiter innerer Lagerabschnitt
- 23": zweiter äußerer Lagerabschnitt
- 25, 125: Spannexzenter
- 27: zweite Stufe
- 31, 131: Fangstück
- 35, 135: Entriegelungsbolzen
- 39: zweiter Haltering, Zwischenelement
- 41, 141: Strukturteil
- 43: Befestigungsbolzen, Befestigungselement
- 113: erster Lagerbolzen
- 113': Flansch des ersten Lagerbolzens
- 123: zweiter Lagerbolzen
- 123': Flansch des zweiten Lagerbolzens
- 139: Haltering
- B: Bolzen, Gegenelement

## Patentansprüche

1. Verriegelungsvorrichtung für einen Fahrzeugsitz, insbesondere für einen Kraftfahrzeugsitz, mit einem offenen Gehäuse (5; 105), einer schwenkbar am Gehäuse (5; 105) gelagerten Klinke (11; 111) zum Verriegeln mit einem Gegenelement (B) und wenigstens einem ebenfalls schwenkbar am Gehäuse (5; 105) gelagerten Sicherungselement (25, 31; 125, 131), welches durch Zusammenwirken mit der Klinke (11; 111) einen verriegelten Zustand sichert, wobei die Verriegelungsvorrichtung (1; 101) an einem Strukturteil (41; 141) anbringbar ist, **dadurch gekennzeichnet, dass** das Strukturteil (41; 141) den Deckel zum weitgehenden Schließen des Gehäuses (5; 105) bildet und dass wenigstens ein an den Enden durch stoffschlüssige und/oder formschlüssige Verbindung mit dem Gehäuse (5; 105) und dem Strukturteil (41; 141) gesichertes Befestigungselement (43; 113, 123) den axialen Zusammenhalt von Gehäuse (5; 105) und Strukturteil (41; 141) sichert, wobei das Befestigungselement (43; 113, 123) im Bereich einer Lagerstelle der Klinke (11; 111) oder des Sicherungselementes (25, 31; 125, 131) angeordnet ist oder selbst die Lagerstelle bildet.

2. Verriegelungsvorrichtung nach Anspruch 1, **dadurch gekennzeichnet, dass** die Verriegelungsvorrichtung (1; 101) bereits mit offenem Gehäuse (5; 105) eine funktionsfähige und prüffähige Einheit bildet.

3. Verriegelungsvorrichtung nach Anspruch 1 oder 2, **dadurch gekennzeichnet, dass** die Verriegelungsvorrichtung (1; 101) durch das Strukturteil (41; 141) und/oder die Befestigungselemente (43; 113, 123) zur Anbringung am Strukturteil (41; 141) ihre volle Festigkeit erreicht.

4. Verriegelungsvorrichtung nach einem der Ansprüche 1 bis 3, **dadurch gekennzeichnet, dass** Bauteile (19, 39; 113', 123', 139) zur axialen Sicherung der Klinke (11; 111) und/oder des Sicherungselementes (25, 31; 125, 131) vor der Anbringung der Verriegelungsvorrichtung (1; 101) am Strukturteil (43; 143) vorgesehen sind.

5. Verriegelungsvorrichtung nach einem der Ansprüche 1 bis 4, **dadurch gekennzeichnet, dass** die Klinke (11) und/oder das Sicherungselement (25, 31) auf einem Durchzug (13, 23) gelagert ist, der am Gehäuse (5) angeformt ist.

6. Verriegelungsvorrichtung nach Anspruch 5, **dadurch gekennzeichnet, dass** der Durchzug (13, 23) eine Stufe (17, 27) aufweist, welche Lagerabschnitte (13', 13", 23', 23") mit unterschiedlichem Außendurchmesser voneinander trennt.

7. Verriegelungsvorrichtung nach Anspruch 6, **dadurch gekennzeichnet, dass** die Klinke (11) und/oder das Sicherungselement (25, 31) auf dem Lagerabschnitt (13', 23') mit größerem Außendurchmesser gelagert ist, während auf dem Lagerabschnitt (13", 23") mit kleinerem Außendurchmesser ein Zwischenelement (19, 39) und/oder das Strukturteil (41) sitzt.

8. Verriegelungsvorrichtung nach einem der Ansprüche 1 bis 7, **dadurch gekennzeichnet, dass** ein Spannexzenter (25; 125) und ein Fangstück (31; 131) als Sicherungselemente (25, 31; 125, 131) vorgesehen sind, wobei der federbelastete Spannexzenter (25; 125) im verriegelten Zustand die Klinke (11; 111) mit einem schließenden Moment beaufschlagt und das Fangstück (31; 131) im Crashfall die Klinke (11) abstützt.

9. Fahrzeugsitz mit wenigstens einer Verriegelungsvorrichtung (1; 101) nach einem der Ansprüche 1 bis 8, insbesondere zur Bodenanbindung und/oder als Lehnenschloss.

## Claims

1. A locking mechanism for a vehicle seat, in particular for a motor vehicle seat, having an open housing (5; 105), a latch (11; 111), which is pivotably mounted on the housing (5; 105), and is intended for locking with a mating element (B) and at least one securing element (25, 31; 125, 131) which is likewise mounted pivotably on the housing (5; 105), and, by interaction with the latch (11; 111), secures a locked state, the locking mechanism (1; 101) being attachable to a structural part (41;141), **characterized in that** the structural part (41; 141) forms the cover for the substantial closing of the housing (5;105) and that at least one fastening element (43; 113, 123), which is secured at the ends with a cohesive material joint and/or in a form-fitting manner with respect to the housing (5; 105) and the structural part (41; 141), ensures that the housing (5;105) and structural part (41; 141) are axially held together, wherein the fastening element (43; 113, 123) is arranged in the region of a bearing point of the latch (11; 111) or of the securing element (25, 31; 125, 131) or itself forms the bearing point.

2. The locking mechanism as claimed in Claim 1, **characterized in that** the locking mechanism (1; 101), even with housing (5; 105) open, forms an operative and testable unit.

3. The locking mechanism as claimed in Claim 1 or 2, **characterized in that** the locking mechanism (1; 101) reaches its full strength by means of the structural part (41; 141) and/or the fastening elements (43; 113, 123) for attaching to the structural part.

4. The locking mechanism as claimed in one of Claims 1 to 3, **characterized in that** components (19, 39; 113', 123', 139) are provided for axially securing the latch (11; 111) and/or the securing element (25, 31; 125, 131) before the locking mechanism (1; 101) is attached to the structural part (43; 143).

5. The locking mechanism as claimed in one of Claims 1 to 4, **characterized in that** the latch (11) and/or the securing element (25, 31) are mounted on a projection (13, 23), which is integrally formed on the housing (5).

6. The locking mechanism as claimed in Claim 5, **characterized in that** the projection (13, 23) has a step (17, 27), which separates bearing sections (13', 13", 23', 23") of differing outside diameters from one another.

7. The locking mechanism as claimed in Claim 6, **characterized in that** the latch (11) and/or the securing element (25, 31) is/are mounted on the bearing section (13', 23') of larger outside diameter, while an intermediate element (19, 39) and/or the structural part (41) is/are seated on the bearing section (13" 23") of smaller outside diameter.

8. The locking mechanism as claimed in one of Claims 1 to 7, **characterized in that** a clamping eccentric (25; 125) and an intercepting component (31; 131) are provided as securing elements (25, 31; 125, 131), the spring-loaded clamping eccentric (25; 125) acting in the locked state upon the latch (11; 111) with a closing moment and the intercepting component (31; 131) supporting the lash (11) in the event of a crash.

9. A vehicle seat having at least one locking mechanism (1; 101), as claimed in one of Claims 1 to 8, particular for connecting to the floor and/or as a backrest lock.

## Revendications

1. Dispositif de verrouillage pour un siège de véhicule, en particulier pour un siège de véhicule automobile, avec un boîtier ouvert (5 ; 105), avec un cliquet (11 ; 111) monté pivotant sur le boîtier (5 ; 105), destiné à se verrouiller sur un élément conjugué (B) et avec au moins un élément d'immobilisation (25, 31 ; 125, 131), également monté pivotant sur le boîtier (5 ; 105), qui, en coopérant avec le cliquet (11 ; 111), assure un état de verrouillage, le dispositif de verrouillage (1 ; 101) pouvant être monté sur un élément structural (41 ; 141), **caractérisé par le fait que** l'élément structural (41 ; 141) forme le couvercle fermant largement le boîtier (5 ; 105) et **par le fait qu'**au moins un élément de fixation (43 ; 113, 123) solidarisé par un assemblage par liaison de matière et/ou complémentarité de forme avec le boîtier (5 ; 105) et l'élément structural (41; 141) assure la fixation axiale du boîtier (5 ; 105) et de l'élément structural (41; 141), l'élément de fixation (43 ; 113, 123) étant monté au niveau d'un point d'appui du cliquet (11 ; 111) ou de l'élément d'immobilisation (25, 31 ; 125, 131) ou constituant lui-même le point d'appui.

2. Dispositif de verrouillage selon la revendication 1, **caractérisé par le fait que** le dispositif de verrouillage (1 ; 101) forme déjà avec le boîtier ouvert (5 ; 105) une unité fonctionnelle et testable.

3. Dispositif de verrouillage selon l'une des revendications 1 ou 2, **caractérisé par le fait que** le dispositif de verrouillage (1 ; 101) atteint sa résistance complète grâce à l'élément structural (41 ; 141) et/ou les éléments de fixation (43 ; 113, 123) pour le montage sur l'élément structural (41 ; 141).

4. Dispositif de verrouillage selon l'une des revendications 1 à 3, **caractérisé par le fait qu'**il est prévu des pièces (19, 39 ; 113', 123', 139) de fixation axiale du cliquet (11 ; 111) et/ou de l'élément d'immobilisation (25, 31 ; 125, 131) avant le montage du dispositif de verrouillage (1 ; 101) sur l'élément structural (43 ; 143).

5. Dispositif de verrouillage selon l'une des revendications 1 à 4, **caractérisé par le fait que** le cliquet (11) et/ou l'élément d'immobilisation (25, 31) sont montés sur une traverse (13, 23) qui est formée sur le boîtier (5).

6. Dispositif de verrouillage selon la revendication 5, **caractérisé par le fait que** la traverse (13, 23) possède un gradin (17, 27) qui sépare des segments d'appui (13', 13", 23', 23") ayant des diamètres extérieurs différents.

7. Dispositif de verrouillage selon la revendication 6, **caractérisé par le fait que** le cliquet (11) et/ou l'élément d'immobilisation (25, 31) sont montés sur le segment d'appui (13', 23') de diamètre extérieur supérieur, tandis que sur le segment d'appui (13", 23") de diamètre extérieur inférieur, un élément intermédiaire (19, 39) et/ou l'élément structural (41) sont en appui.

8. Dispositif de verrouillage selon l'une des revendications 1 à 7, **caractérisé par le fait qu'**un excentrique de serrage (25 ; 125) et une pièce d'appui (31 ; 131) sont prévus comme éléments d'immobilisation (25, 31 ; 125, 131), l'excentrique de serrage (25 ; 125) sollicité par ressort appliquant dans l'état de verrouillage un couple de fermeture au cliquet (11 ; 111) et la pièce d'appui (31 ; 131) supportant le cliquet (11) en cas de collision.

9. Siège de véhicule avec au moins un dispositif de verrouillage (1 : 101) tel que défini à l'une des revendications 1 à 8, en particulier destiné à assurer la fixation au sol et/ou à verrouiller le dossier.
